(19) Europäisches Patentamt
European Patent Office
Office européen des brevets

(11) EP 0 546 566 B1

(12) **EUROPÄISCHE PATENTSCHRIFT**

(45) Veröffentlichungstag und Bekanntmachung des Hinweises auf die Patenterteilung:
**04.09.1996 Patentblatt 1996/36**

(51) Int. Cl.$^6$: **C07F 9/30**, C07F 9/32

(21) Anmeldenummer: **92121154.6**

(22) Anmeldetag: **11.12.1992**

(54) **Verfahren zur Herstellung von L-Phosphinothricin und seinen Derivaten**

Process for the preparation of L-phosphinothricine and its derivatives

Procédé de préparation de L-phosphinothricine et de ses dérivés

(84) Benannte Vertragsstaaten:
**AT BE CH DE FR GB IT LI NL**

(30) Priorität: **13.12.1991 DE 4141042**

(43) Veröffentlichungstag der Anmeldung:
**16.06.1993 Patentblatt 1993/24**

(73) Patentinhaber: **Hoechst Schering AgrEvo GmbH**
**13342 Berlin (DE)**

(72) Erfinder: **Zeiss, Hans-Joachim, Dr.**
**W-6231 Sulzbach/Ts. (DE)**

(56) Entgegenhaltungen:
**EP-A- 0 011 245**
**EP-A- 0 018 415**
**EP-A- 0 346 658**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 546 566 B1

Printed by Rank Xerox (UK) Business Services
2.13.4/3.4

## Beschreibung

Die Erfindung betrifft ein Verfahren zur enantioselektiven Herstellung von L-Homoalanin-4-yl-(methyl)phosphinsäure, im folgenden L-Phosphinothricin oder L-Ptc genannt, sowie ihrer Derivate der allgemeinen Formel I,

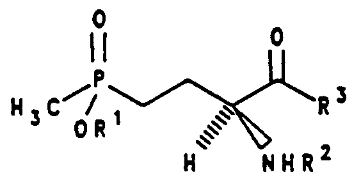

(I)

worin

- $R^1$ Wasserstoff, $(C_1-C_6)$-Alkyl, $(C_1-C_4)$-Halogenalkyl, $(C_3-C_6)$-Cycloalkyl oder Phenyl-$(C_1-C_4)$-alkyl, das im Phenylrest unsubstituiert oder substituiert ist,
- $R^2$ Wasserstoff, Formyl, $[(C_1-C_6)$Alkyl]-carbonyl, $[(C_1-C_6)$Alkoxy]-carbonyl, Benzyloxycarbonyl, das im Benzylrest unsubstituiert oder substituiert ist, $(C_1-C_6)$-Alkylsulfonyl, $(C_6-C_{10})$-Arylsulfonyl, das im Arylrest unsubstituiert oder substituiert ist, und
- $R^3$ Hydroxy, Amino oder $(C_1-C_6)$-Alkoxy

bedeuten, oder deren Salze mit anorganischen oder organischen Säuren oder Basen.

L-Phosphinothricin, seine Ester sowie seine Salze mit organischen oder anorganischen Säuren oder Basen sind die wirksamen Enantiomeren der in DE-A-27 17 440 beschriebenen, herbizid wirksamen Racemate. Laut DE-A-28 56 260 ist die herbizide Wirkung von L-Ptc doppelt so groß wie die des Racemats, weshalb der Einsatz des L-Isomeren eindeutige Vorteile bietet, vor allem die wirtschaftlichen und ökologischen Vorteile, die sich aus der niedrigerer Aufwandmenge, geringeren Mengen an Formulierungshilfsmitteln und dadurch weniger an im Boden und in den Pflanzen biologisch abzubauenden Stoffen ergeben.

L-Phosphinothricin ist bisher nur durch aufwendige, enzymatische Racematspaltungsverfahren (DE-A-29 39 269; DE-A-30 48 612; EP-A-301 391; EP-A-358 428; EP-A-382 113; J. Chem. Soc. Perkin Trans 1989, 125) oder durch enzymatische Transaminierung (EP-A-248357, EP-A-249188; Appl. Environ. Microbiol. 56 (1990) 1) zugänglich.

Neben diesen biochemischen Methoden sind auch chemische Verfahren zur Herstellung von L-Ptc bekannt, die aber mit verschiedenen Nachteilen behaftet sind. So werden mit Hilfe der in EP-A-127 429 beschriebenen enantioselektiven Alkylierung von chiralen Schiff-Basen in der Regel nur optische Ausbeuten bis 78 % erreicht, während die in DE-A-36 09 818 beschriebene, enantioselektive Hydrierung von 2,3-Didehydroaminosäurederivaten schwer zugängliche Ausgangsmaterialien benötigt.
Daneben sind noch zwei Verfahren bekannt, die von heterocyclischen Vorstufen ausgehen, die jedoch nur in mehrstufigen, aufwendigen Synthesen herstellbar sind (DE-A-35 42 645; DE-A-35 25 267).

Es bestand daher die Aufgabe, ein Verfahren zu entwickeln, das auf einfache Weise die Herstellung von L-Phosphinothricin und seinen Derivaten mit hoher optischer Reinheit auch in größeren Mengen erlaubt.

Gegenstand der vorliegenden Erfindung ist somit ein Verfahren zur Herstellung von Verbindungen der allgemeinen Formel I, dadurch gekennzeichnet, daß man

a) ein L-Vinylglycinderivat der allgemeinen Formel II mit einem Methanphosphonigsäuremonoester der allgemeinen Formel III,

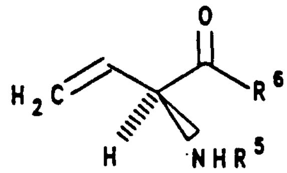

(II)

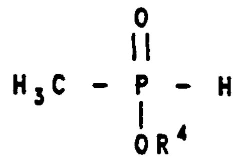

(III)

worin

$R^4$ wie der Rest $R^1$, ausgenommen Wasserstoff, und
$R^5$ wie der Rest $R^2$, ausgenommen Wasserstoff, definiert sind und
$R^6$ $(C_1\text{-}C_6)$Alkoxy bedeutet,

in Gegenwart einer katalytischen Menge eines Radikalbildners bei Reaktionstemperaturen von 70 °C bis 115 °C zu Verbindungen Ia der Formel I, worin

$R^1$ wie der Rest $R^4$,
$R^2$ wie der Rest $R^5$ und
$R^3$ wie der Rest $R^6$ definiert sind, umsetzt und

b) gewünschtenfalls die nach Stufe a) erhaltenen Verbindungen Ia analog üblichen Methoden aus der Gruppe enthaltend Hydrolyse- und Aminolyseverfahren in strukturell andere Verbindungen Ib der Formel I, worin

$R^1$ wie der Rest $R^4$ definiert ist oder Wasserstoff bedeutet,
$R^2$ wie der Rest $R^5$ definiert ist oder Wasserstoff bedeutet und
$R^3$ wie der Rest $R^6$ definiert ist oder Hydroxy oder Amino bedeutet,

überführt und
c) gewünschtenfalls die nach Stufe a) oder b) erhaltenen Verbindungen Ia bzw. Ib mit anorganischen oder organischen Säuren oder Basen in Salze der entsprechenden Verbindungen der Formel I überführt.

In der Formel (I) und im folgenden können die Reste Alkyl und Alkoxy sowie die Alkyl- und Alkoxyreste in den entsprechenden substituierten Resten jeweils geradkettig oder verzweigt sein. Wenn nicht speziell angegeben, sind bei diesen Resten die Kohlenstoffatomketten oder Kohlenstoffgerüste mit 1 bis 4 C-Atomen bevorzugt. Alkylreste, auch in den zusammengesetzten Bedeutungen wie Alkoxy, Alkylsulfonyl usw., bedeuten Methyl, Ethyl, n- oder i-Propyl, n-, i-, t- oder 2-Butyl. Halogen bedeutet Fluor, Chlor, Brom oder Jod; Halogenalkyl bedeutet Alkyl, das durch ein oder mehrere Atome aus der Gruppe Halogen substituiert ist; Halogenalkyl ist beispielsweise $CF_3$, $CHF_2$, $CH_2CF_3$. Aryl bedeutet beispielsweise Phenyl, Naphthyl, Tetrahydronaphthyl, Indenyl, Indanyl und ähnliche Reste, vorzugsweise Phenyl; die Substituenten sind im Falle substituiertes Aryl, Phenyl oder Benzyl vorzugsweise jeweils ein oder mehrere, insbesondere 1, 2 oder 3, Reste aus der Gruppe Halogen, Alkyl, Halogenalkyl, Alkoxy, Halogenalkoxy, Nitro, Cyano, Alkoxycarbonyl, Alkylcarbonyl, Alkanoyl, Carbamoyl, Mono- und Dialkylaminocarbonyl, Mono- und Dialkylamino, Alkylsulfinyl und Alkylsulfonyl; dabei sind bei Resten mit C-Atomen solche mit 1 bis 4 C-Atomen, insbesondere 1 oder 2 C-Atomen, bevorzugt; Bevorzugt sind in der Regel Substituenten aus der Gruppe Halogen, wie Fluor und Chlor, $C_1$-$C_4$-Alkyl, vorzugsweise Methyl oder Ethyl, $C_1$-$C_4$-Halogenalkyl, vorzugsweise Trifluormethyl, $C_1$-$C_4$-Alkoxy, vorzugsweise Methoxy oder Ethoxy, $C_1$-$C_4$-Halogenalkoxy, Nitro und Cyano. Besonders bevorzugt sind Methyl, Methoxy und Chlor.

Von besonderem Interesse sind erfindungsgemäße Verfahren, wobei in Formel I

$R^1$ Wasserstoff, $(C_1\text{-}C_6)$-Alkyl, Cyclopentyl, Cyclohexyl oder Benzyl,
$R^2$ Wasserstoff, Formyl, $[(C_1\text{-}C_4)$Alkyl]-carbonyl, $[(C_1\text{-}C_4)$Alkoxy]-carbonyl, Benzyloxycarbonyl, $(C_1\text{-}C_4)$-Alkylsulfonyl, Phenylsulfonyl, das im Phenylrest unsubstituiert oder substituiert ist, und
$R^3$ Hydroxy, Amino oder $(C_1\text{-}C_6)$-Alkoxy

bedeuten.

Bevorzugt sind erfindungsgemäße Verfahren, wobei in Formel I

$R^1$ Wasserstoff, $(C_1\text{-}C_4)$-Alkyl,
$R^2$ Wasserstoff, $[(C_1\text{-}C_4)$Alkyl]-carbonyl, $[(C_1\text{-}C_4)$Alkoxy]-carbonyl, Benzyloxycarbonyl und
$R^3$ Hydroxy, Amino oder $(C_1\text{-}C_4)$-Alkoxy

bedeuten.

Als Radikalbildner können beispielsweise Verbindungen verwendet werden, die in dem Temperaturbereich von 70-115 °C in freie Radikale zerfallen, wie z.B. Perbenzoesäure-t-butylester, Perpivalinsäure-t-butylester, Perethylhexansäure-t-butylester, Perneodecansäure-t-butylester oder Azobisisobutyronitril oder Gemische aus zweien oder mehreren dieser Verbindungen. Auch Ultraviolettstrahlung kann zur Bildung der freien Radikale eingesetzt werden.

Die optischen Ausbeuten sind meist größer als 90 %, was einem Gehalt von mindestens 95 % des L-Enantiomeren entspricht.

Additionen von Methanphosphonigsäuremonoestern an funktionalisierte Olefine zur Herstellung von Phosphinothricin und seinen Derivaten sind zwar prinzipiell bekannt, die beschriebenen Verfahren sind jedoch mit verschiedenen Nachteilen behaftet.

So wird in EP-A-18 415 die Umsetzung von racemischen Vinylglycinderivaten mit Methanphosphonigsäuremonoestern beschrieben, wobei in den Ausführungsbeispielen allerdings Reaktionstemperaturen von mindestens 140 °C angewendet werden. Bei optisch aktiven Verbindungen der genannten Formel II führen derartige Reaktionsbedingungen zur teilweisen oder weitgehenden Racemisierung.

Weiterhin wird in Sci. Rep. of Meiji Seika Saisha 20 (1981) Seiten 33ff. darauf hingewiesen, daß im Falle eingesetzter Verbindungen der genannten Formel II, worin $R^5$ = Acetyl oder Benzoyl und $R^6$ = Hydroxy sind, bei Reaktionstemperaturen von 130 bis 140 °C eine Isomerisierung der Verbindungen der Formel II zu Verbindungen der Formel IV eintritt:

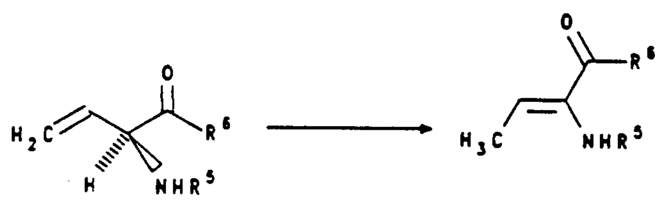

(II) (IV)

Lediglich im Falle, daß $R^5$ eine elektronenziehende Gruppe wie Trifluormethyl bedeutet, ist der Anteil an Isomerisierung vernachlässigbar gering. Das bekannte Verfahren ist deshalb zur enantioselektiven Synthese von Verbindungen der genannten Formel I nicht geeignet.

Überraschenderweise gelingt die radikalische Additionsreaktion bei dem erfindungsgemäßen Verfahren in effektiver Weise bei wesentlich niedrigerer Temperatur. Auch war nicht zu erwarten, daß die Reaktion praktisch razemisierungsfrei abläuft.

Die Umsetzung von cyclischen L-Vinylglycinderivaten mit Methanphosphonigsäuremonoestern ist Inhalt der EP-A-346 658. Zwar sind die dort beschriebenen optischen Reinheiten für L-Ptc von über 90 % zufriedenstellend, jedoch ist, je nach verwendetem Ausgangsmaterial die Herstellung von L-Ptc-Derivaten nur aufwendig über mehrere Stufen zu bewerkstelligen.

Demgegenüber ist das erfindungsgemäße Verfahren mit einfach zugänglichen Ausgangsmaterialien durchzuführen. Desweiteren lassen sich die in Stufe a) erhaltenen Verbindungen der Formel I (Verbindungen Ia) durch einfache, saure Hydrolyse in die freie Aminosäure L-Ptc bzw. deren Hydrochlorid überführen.

Der Verfahrensschritt a) wird beispielsweise so durchgeführt, daß man die Verbindung der Formel II und 0,1 bis 20 Molprozent, vorzugsweise 0,5 bis 10 Molprozent des Radikalbildners, bezogen auf die Verbindung der Formel II, zu einem 1,5- bis 4-fachen Überschuß an Methanphosphonigsäuremonoester, der auf Reaktionstemperatur erwärmt ist, zugibt. Die Zugabe soll vorzugsweise so erfolgen, daß eine möglichst geringe stationäre Konzentration an Verbindung der Formel II eingestellt wird.

Die Reaktionstemperatur beträgt in Stufe a) 70 bis 115 °C, vorzugsweise 80 bis 110 °C, insbesondere 80 bis 100 °C. Die Reaktion wird in Stufe a) vorzugsweise in Substanz, d. h. ohne zusätzliches Lösungsmittel, durchgeführt. Falls es sich bei der Verbindung II um einen Feststoff oder eine hochviskose Flüssigkeit handelt, kann es vorteilhaft sein, diese zusammen mit dem Radikalbildner in einem inerten Lösungsmittel zu lösen. Geeignete inerte Lösungsmittel sollen mit den freien Radikalen unter den Reaktionsbedingungen nicht oder in möglichst geringem Ausmaß reagieren. Solche Lösungsmittel sind beispielsweise unverzweigte Kohlenwasserstoffe, wie n-Pentan oder n-Hexan, oder gegebenenfalls halogenierte, aromatische Kohlenwasserstoffe, wie Toluol, Xylol oder Chlorbenzol.
Zur Vermeidung unerwünschter Nebenreaktionen ist es meist ratsam, die Reaktion in einer Schutzgasatmosphäre durchzuführen. Als Schutzgase kommen z. B. Stickstoff oder Argon in Frage.

Die Reaktionsdauer liegt in Stufe a) in der Regel zwischen 0,25 und 3 Stunden, der Fortgang der Reaktion läßt sich mit üblichen analytischen Methoden, wie Gaschromatographie oder Dünnschichtchromatographie, verfolgen.
Nach beendeter Reaktion kann der im Überschuß vorhandene Methanphosphonigsäuremonoester III, gegebenenfalls zusammen mit vorhandenem Lösungsmittel, beispielsweise durch Destillation vom Reaktionsprodukt abgetrennt werden. Das rohe Reaktionsprodukt der allgemeinen Formel Ia kann durch übliche Verfahren, wie z.B. Kristallisation oder Chromatographie weiter gereinigt werden.

Überraschend an dem erfindungsgemäßen Verfahren ist neben der Tatsache, daß keine Racemisierung oder Isomerisierung des Ausgangsmaterials der Formel II eintritt, daß keine Polymerisation der substituierten Vinylverbindung der Formel II stattfindet, da die Reaktionsbedingungen denen einer radikalischen Polymerisation entsprechen (vgl. G. Henrici-Olive, S. Olive: Polymerisation, S. 1 ff, Verlag Chemie, Weinheim 1969).

Die Verbindungen der genannten Formel II sind auf verschiedenen Wegen auf einfache Weise aus L-Methionin (J. Org. Chem. 45 (1980) 4817; J. Org. Chem. 52 (1987) 4471; Chem. Pharm. Bull. 36 (1988) 893; J. Org. Chem. 52 (1988) 4074; Synth. Comm. 19 (1989) 3457) oder L-Glutaminsäure (Tetrahedron Lett. 25 (1984) 1425; Tetrahedron 41 (1985) 4347; J. Org. Chem. 56 (1991) 728) zugänglich. Die Verbindungen der allgemeinen Formel III werden in Houben-Weyl, Methoden der organischen Chemie, Band XII/1, S. 1, 5, 193 und 294 (1963), Georg Thieme Verlag, Stuttgart, beschrieben.

Die Verfahrensstufe b) kann dazu dienen, die in Stufe a) erhaltenen Verbindungen der Formel I in die Verbindungen der Formel I umzuwandeln, in denen mindestens einer der Reste $R^1$, $R^2$ und $R^3$ eine der folgenden Bedeutungen hat: $R^1$ = Wasserstoff, $R^2$ = Wasserstoff und $R^3$ = Hydroxy oder Amino.

Die Verfahrensstufe c) kann dazu dienen, die in Stufe a) oder b) erhaltenen Verbindungen Ia bzw. Ib in Salze zu überführen. Bei der Durchführung der Stufe b) kann in den meisten Fällen die Salzbildung nach Stufe c) direkt bzw. gleichzeitig erfolgen, so daß die Stufen b) und c) in der Regel als Eintopf-Verfahren durchgeführt werden.

Verwendet man in Verfahrensschritt b) eine vollständige saure oder alkalische Hydrolyse, so erhält man die freie Aminosäure L-Phosphinothricin (L-Ptc).
Bevorzugt wird die Hydrolyse mit 3N-12N wäßriger Salzsäure, besonders bevorzugt mit 5N-10N HCl, durchgeführt. Die Reaktionstemperatur beträgt z.B. 90-130 °C, die Reaktionsdauer in der Regel 5-20 Stunden, bevorzugt jedoch 8-15 Stunden. Nach beendeter Reaktion wird die wäßrige Reaktionslösung zur Aufarbeitung z.B. mit einem nicht mit Wasser mischbaren Lösungsmittel, wie Toluol, Xylol, Dichlormethan oder Methylisobutylketon extrahiert, um die Folgeprodukte der Abspaltung der Reste $R^4$, $R^5$ und $R^6$ zu entfernen.
Das nach Einengen der wäßrigen Lösung erhaltene rohe L-Ptc, das bei der oben beschriebenen Verwendung von Salzsäure als Hydrochlorid anfällt, kann durch bekannte Maßnahmen wie Umkristallisation oder Ionenaustausch weiter gereinigt werden.

Derivate der allgemeinen Formel I, in denen $R^3$ Amino bedeutet, werden erhalten, wenn man die in Stufe a) erhaltene Verbindung Ia z.B. mit wäßrigem Ammoniak umsetzt.

Die nachfolgenden Beispiele dienen zur Erläuterung der Erfindung, sie ist jedoch dadurch nicht auf die beispielhaft beschriebenen Verfahrensweisen beschränkt.

## Beispiel 1

L-2-Benzyloxycarbonylamino-4-[ethoxy(methyl)phosphinyl]-buttersäuremethylester

1,40 g (13,2 mmol) Methanphosphonigsäuremonoethylester werden unter Argonatmosphäre auf 95 °C erwärmt. Innerhalb von 10 min wird bei dieser Temperatur eine Mischung von 1,10 g (4,4 mmol) L-2-Benzyloxycarbonylamino-3-butensäuremethylester und 0,032 g (0,15 mmol) Perethylhexansäure-t-butylester in 3,5 ml Xylol zugetropft. Die Reaktionsmischung wird noch 1 Stunde bei 95 °C gerührt, dann werden alle flüchtigen Anteile im Hochvakuum abdestilliert. Das so erhaltene Rohprodukt wird durch Chromatographie an Kieselgel (Laufmittel: Dichlormethan/Methanol) gereinigt. Man erhält 0,90 g (57,4 % der Theorie) L-2-Benzyloxycarbonylamino-4-[ethoxy(methyl)-phosphinyl]-buttersäuremethylester als farbloses Öl.
$[\alpha]_D^{23}$ = + 10,90° (c = 0,4550, $CHCl_3$)
$^1$H-NMR (100 MHz, $CDCl_3$) $\delta$ = 7,35 (s, 5, $C_6H_5$); 5,65 (s, br, 1, CHNHCOO); 5,10 (s, 2, $OCH_2C_6H_5$); 4,42 (m, 1, CHNHCOO); 4,03 (qd, 2, J = 7 Hz, J = 2 Hz, $H_3CCH_2OP$); 3,75 (s, 3, $COOCH_3$); 2,39-1,55 (m, 4, $PCH_2CH_2CH$); 1,43 (d, 3, J = 14 Hz, $PCH_3$); 1,30 (dt, 3, J = 2 Hz, J = 7 Hz, $POCH_2CH_3$).
$^{31}$P-NMR (121 MHz, $CDCl_3$) $\delta$ = 54,075.
Wie aus dem $^1$H NMR-Spektrum ersichtlich, enthält die Probe 1 Mol Wasser, das auch durch 14-tägiges Trocknen über

$P_2O_5$ nicht entfernt werden kann.

| CHN-Analyse: | | | | |
|---|---|---|---|---|
| $C_{16}H_{24}NO_6P$ x 1 $H_2O$: | Ber: | C, 51,19; | H, 6,98; | N, 3,73. |
| | Gef: | C, 51,60; | H, 6,60; | N, 3,40. |

Beispiel 2

L-2-Benzyloxycarbonylamino-4-[n-butoxy(methyl)phosphinyl]-buttersäuremethylester

Ausgehend von 1,88 g (13,8 mmol) Methanphosphonigsäure-n-butylester und 1,15 g (4,6 mmol) L-2-Benzyloxycarbonylamino-3-butensäuremethylester erhält man unter den in Beispiel 1 genannten Bedingungen 1,22 g (68,8 % der Theorie) L-2-Benzyloxycarbonylamino-4-[n-butoxy(methyl)-phosphinyl]-buttersäuremethylester als farbloses Öl.
$[\alpha]_D^{23}$ = + 10,10 ° (c = 0,662, $CHCl_3$)
$^1$H-NMR (100 MHz, $CDCl_3$) $\delta$ = 7,34 (s, 5, $C_6H_5$); 5,68 (s, br, 1, CHNHCOO); 5,09 (s, 2, $OCH_2C_6H_5$); 4,39 (m, 1, CHNHCOO); 3,94 (m, J = 7 Hz, J = 2 Hz, $CH_2CH_2OP$); 3,72 (s, 3, $COOCH_3$); 2,40-1,14 (m, 8, $PCH_2CH_2CH$ und $H_3CCH_2CH_2CH_2O$); 1,43 (d, 3, J = 14 Hz, $PCH_3$); 0,90 (m, 3, $POCH_2CH_2CH_2CH_3$).
$^{31}$P-NMR (121 MHz, $CDCl_3$) $\delta$ = 54,107.

Beispiel 3

L-Phosphinothricin-hydrochlorid

0,69 g (1,93 mmol) L-2-Benzyloxycarbonylamino-4-[ethoxy(methyl)phosphinyl]-buttersäuremethylester (aus Beispiel 1) werden in 10 ml 6N HCl gelöst und 10,5 Stunden unter Rückfluß erhitzt. Nach dem Abkühlen auf Raumtemperatur wird die wäßrige Lösung 2 mol mit je 3 ml Dichlormethan extrahiert und die wäßrige Phase anschließend zur Trockne eingeengt. Man erhält als Rückstand 0,35 g (83,3 % der Theorie) L-Phosphinothricin-hydrochlorid, das anhand seines $^1$H NMR-Spektrums identifiziert wird.
$[\alpha]_D^{23}$ = + 20,10° (c = 1,860, 1N HCl)
Der Enantiomerenüberschuß, der mit Hilfe einer HPLC-Methode [J. Chromatogr. 368, 413, (1986)] bestimmt wurde, beträgt 92,6 %.

## Patentansprüche

1. Verfahren zur Herstellung von Verbindungen der allgemeinen Formel I,

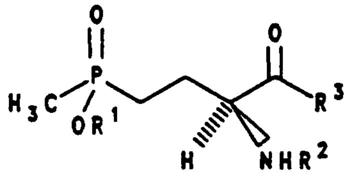

(I)

worin

- $R^1$ Wasserstoff, ($C_1$-$C_6$)-Alkyl, ($C_1$-$C_4$)-Halogenalkyl, ($C_3$-$C_6$)-Cycloalkyl oder Phenyl-($C_1$-$C_4$)-alkyl, das im Phenylrest unsubstituiert oder substituiert ist,
- $R^2$ Wasserstoff, Formyl, [($C_1$-$C_6$)Alkyl]-carbonyl, [($C_1$-$C_6$)Alkoxy]-carbonyl, Benzyloxycarbonyl, das im Benzylrest unsubstituiert oder substituiert ist, ($C_1$-$C_6$)-Alkylsulfonyl, ($C_6$-$C_{10}$)-Arylsulfonyl, das im Arylrest unsubstituiert oder substituiert ist, und
- $R^3$ Hydroxy, Amino oder ($C_1$-$C_6$)-Alkoxy

bedeuten, oder deren Salze mit anorganischen oder organischen Säuren oder Basen, dadurch gekennzeichnet, daß man

a) ein L-Vinylglycinderivat der allgemeinen Formel II mit einem Methanphosphonigsäuremonoester der allgemeinen Formel III,

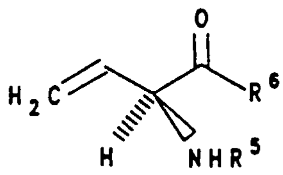

(II)

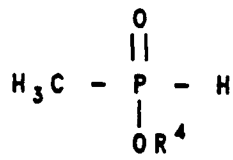

(III)

worin

- $R^4$ wie der Rest $R^1$, ausgenommen Wasserstoff, und
- $R^5$ wie der Rest $R^2$, ausgenommen Wasserstoff, definiert sind und
- $R^6$ $(C_1-C_6)$Alkoxy bedeutet,

in Gegenwart einer katalytischen Menge eines Radikalbildners bei Reaktionstemperaturen von 70 °C bis 115 °C zu Verbindungen Ia der Formel I, worin

- $R^1$ wie der Rest $R^4$,
- $R^2$ wie der Rest $R^5$ und
- $R^3$ wie der Rest $R^6$ definiert sind, umsetzt und

b) gewünschtenfalls die nach Stufe a) erhaltenen Verbindungen Ia analog üblichen Methoden aus der Gruppe enthaltend Hydrolyse- und Aminolyseverfahren in strukturell andere Verbindungen Ib der Formel I, worin

- $R^1$ wie der Rest $R^4$ definiert ist oder Wasserstoff bedeutet,
- $R^2$ wie der Rest $R^5$ definiert ist oder Wasserstoff bedeutet und
- $R^3$ wie der Rest $R^6$ definiert ist oder Hydroxy oder Amino bedeutet,

überführt und
c) gewünschtenfalls die nach Stufe a) oder b) erhaltenen Verbindungen Ia bzw. Ib mit anorganischen oder organischen Säuren oder Basen in Salze der entsprechenden Verbindungen der Formel I überführt.

**2.** Verfahren nach Anspruch 1, dadurch gekennzeichnet, daß

- $R^1$ Wasserstoff, $(C_1-C_6)$-Alkyl, Cyclopentyl, Cyclohexyl oder Benzyl,
- $R^2$ Wasserstoff, Formyl, $[(C_1-C_4)$Alkyl]-carbonyl, $[(C_1-C_4)$Alkoxy]-carbonyl, Benzyloxycarbonyl, $(C_1-C_4)$-Alkylsulfonyl, Phenylsulfonyl, das im Phenylrest unsubstituiert oder substituiert ist, und
- $R^3$ Hydroxy, Amino oder $(C_1-C_6)$-Alkoxy bedeuten.

**3.** Verfahren nach Anspruch 1 oder 2, dadurch gekennzeichnet, daß

- $R^1$ Wasserstoff oder $(C_1-C_4)$-Alkyl,
- $R^2$ Wasserstoff, $[(C_1-C_4]$Alkyl]-carbonyl, $[(C_1-C_4)$Alkoxy]-carbonyl, Benzyloxycarbonyl und
- $R^3$ Hydroxy, Amino oder $(C_1-C_4)$-Alkoxy bedeuten.

**4.** Verfahren nach einem der Ansprüche 1 bis 3, dadurch gekennzeichnet, daß man in Verfahrensschritt a) Reaktionstemperaturen von 80 bis 110 °C verwendet.

**5.** Verfahren nach einem der Ansprüche 1 bis 4, dadurch gekennzeichnet, daß man als Radikalbildner Perbenzoesäure-t-butylester, Perpivalinsäure-t-butylester, Perethylhexansäure-t-butylester, Perneodecansäure-t-butylester oder Azobisisobutyronitril oder Gemische aus zweien oder mehreren dieser Verbindungen verwendet.

6. Verfahren nach einem der Ansprüche 1 bis 5, dadurch gekennzeichnet, daß man den Radikalbildner in Mengen von 0,1 bis 20 Molprozent, bezogen auf die Verbindung der allgemeinen Formel II, zusetzt.

7. Verfahren nach Anspruch 6, dadurch gekennzeichnet, daß man den Radikalbildner in Mengen von 0,5 bis 10 Molprozent bezogen auf die Verbindung der allgemeinen Formel II zusetzt.

8. Verfahren nach einem der Ansprüche 1 bis 7, dadurch gekennzeichnet, daß man im Verfahrensschritt b) wäßrige 3N-12N Salzsäure zur Hydrolyse verwendet.

9. Verfahren nach Anspruch 8, dadurch gekennzeichnet, daß man im Verfahrensschritt b) wäßrige 5N-10N Salzsäure zur Hydrolyse verwendet.

10. Verfahren nach Anspruch 8 oder 9, dadurch gekennzeichnet, daß man im Verfahrensschritt b) eine Reaktionstemperatur von 90 bis 130 °C verwendet.

## Claims

1. A process for the preparation of a compound of the formula I

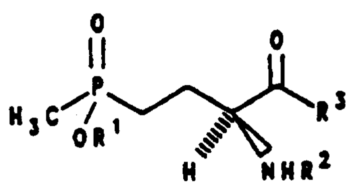

(I)

in which

$R^1$ is hydrogen, $(C_1\text{-}C_6)$-alkyl, $(C_1\text{-}C_4)$-haloalkyl, $(C_3\text{-}C_6)$-cycloalkyl or phenyl-$(C_1\text{-}C_4)$-alkyl which is unsubstituted or substituted in the phenyl radical,
$R^2$ is hydrogen, formyl, $[(C_1\text{-}C_6)$alkyl]carbonyl, $[(C_1\text{-}C_6)$alkoxy]carbonyl, benzyloxycarbonyl which is unsubstituted or substituted in the benzyl radical, $(C_1\text{-}C_6)$-alkylsulfonyl, or $(C_6\text{-}C_{10})$-arylsulfonyl which is unsubstituted or substituted in the aryl radical, and
$R^3$ is hydroxyl, amino or $(C_1\text{-}C_6)$-alkoxy,

or its salts with inorganic or organic acids or bases, which comprises

a) reacting an L-vinylglycine derivative of the formula II with a methanephosphonous acid monoester of the formula III

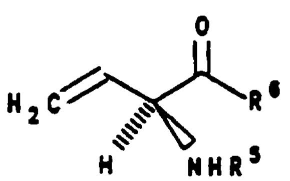

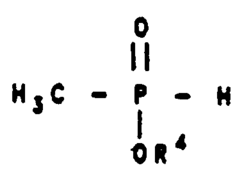

(II)

(III)

in which

$R^4$ is defined as the radical $R^1$, excepting hydrogen, and
$R^5$ is defined as the radical $R^2$, excepting hydrogen, and
$R^6$ is $(C_1\text{-}C_6)$alkoxy,

in the presence of a catalytic amount of a free radical initiator at reaction temperatures of 70°C to 115°C to give compounds Ia of the formula I, in which

$R^1$ is defined as the radical $R^4$,
$R^2$ is defined as the radical $R^5$ and
$R^3$ is defined as the radical $R^6$, and

b) if desired converting the compounds Ia obtained according to step a) analogously to customary methods from the group comprising hydrolysis and aminolysis processes into structurally different compounds Ib of the formula I, in which

$R^1$ is defined as the radical $R^4$ or is hydrogen,
$R^2$ is defined as the radical $R^5$ or is hydrogen and
$R^3$ is defined as the radical $R^6$ or is hydroxyl or amino, and

c) if desired converting the compounds Ia or Ib obtained according to step a) or b) into salts of the corresponding compounds of the formula I using inorganic or organic acids or bases.

2. The process as claimed in claim 1, wherein

$R^1$ is hydrogen, ($C_1$-$C_6$)-alkyl, cyclopentyl, cyclohexyl or benzyl,
$R^2$ is hydrogen, formyl, [($C_1$-$C_4$)alkyl]carbonyl, [($C_1$-$C_4$)alkoxy]carbonyl, benzyloxycarbonyl, ($C_1$-$C_4$)-alkylsulfonyl, or phenylsulfonyl which is unsubstituted or substituted in the phenyl radical, and
$R^3$ is hydroxyl, amino or ($C_1$-$C_6$)-alkoxy.

3. The process as claimed in claim 1 or 2, wherein

$R^1$ is hydrogen or ($C_1$-$C_4$)-alkyl,
$R^2$ is hydrogen, [($C_1$-$C_4$)alkyl]carbonyl, [($C_1$-$C_4$)-alkoxy]carbonyl or benzyloxycarbonyl, and
$R^3$ is hydroxyl, amino or ($C_1$-$C_4$)-alkoxy.

4. The process as claimed in any one of claims 1 to 3, wherein reaction temperatures of 80 to 110°C are used in process step a).

5. The process as claimed in any one of claims 1 to 4, wherein the free radical initiators used are t-butyl perbenzoate, t-butyl perpivalate, t-butyl perethylhexanoate, t-butyl perneodecanoate or azobisisobutyronitrile or mixtures of two or more of these compounds.

6. The process as claimed in any one of claims 1 to 5, wherein the free radical initiator is added in amounts of 0.1 to 20 mol%, relative to the compound of the formula II.

7. The process as claimed in claim 6, wherein the free radical initiator is added in amounts of 0.5 to 10 mol%, relative to the compound of the formula II.

8. The process as claimed in any one of claims 1 to 7, wherein aqueous 3N-12N hydrochloric acid is used in process step b) for hydrolysis.

9. The process as claimed in claim 8, wherein aqueous 5N-10N hydrochloric acid is used in process step b) for hydrolysis.

10. The process as claimed in claim 8 or 9, wherein a reaction temperature of 90 to 130°C is used in process step b).

## Revendications

1. Procédé de préparation de composés de formule I

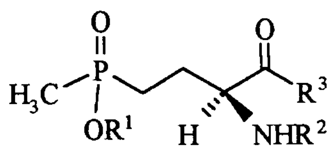

(I)

dans laquelle

$R^1$ représente un atome d'hydrogène ou un reste alkyle en $C_1$-$C_6$, halogénoalkyle en $C_1$-$C_4$, cycloalkyle en $C_3$-$C_6$ ou phényl(alkyle en $C_1$-$C_4$) non substitué ou substitué sur le reste phényle,
$R^2$ représente un atome d'hydrogène ou un reste formyle, (alkyle en $C_1$-$C_6$)carbonyle, (alcoxy en $C_1$-$C_6$)carbonyle, benzyloxycarbonyle non substitué ou substitué sur le reste benzyle, alkylsulfonyle en $C_1$-$C_6$, arylsulfonyle en $C_6$-$C_{10}$ non substitué ou substitué sur le reste aryle, et
$R^3$ représente un groupe hydroxy, amino ou alcoxy en $C_1$-$C_6$,

ou de leurs sels avec des acides ou des bases inorganiques ou organiques, caractérisé en ce que

a) on fait réagir un dérivé de L-vinylglycine de formule générale II avec un monoester de l'acide méthanephosphinique de formule générale (III)

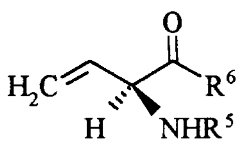

(II)

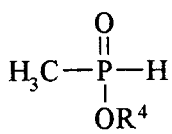

(III)

dans lesquelles

$R^4$ a la même définition que le reste $R^1$, à l'exception de l'hydrogène,
$R^5$ a la même définition que le reste $R^2$, à l'exception de l'hydrogène, et
$R^6$ représente un groupe alcoxy en $C_1$-$C_6$,

en présence d'une quantité catalytique d'un agent formateur de radicaux, à des températures de réaction de 70°C à 115°C, pour obtenir des composés Ia de formule I dans lesquels

$R^1$ a la même définition que le reste $R^4$,
$R^2$ a la même définition que le reste $R^5$ et
$R^3$ a la même définition que le reste $R^6$, et

b) on transforme éventuellement les composés Ia obtenus après l'étape a), de façon analogue à des méthodes classiques du groupe comprenant les procédés d'hydrolyse et d'aminolyse, en des composés Ib de formule I de structure différente, dans lesquels

$R^1$ a la même définition que le reste $R^4$ ou représente un atome d'hydrogène,
$R^2$ a la même définition que le reste $R^5$ ou représente un atome d'hydrogène et
$R^3$ a la même définition que le reste $R^6$ ou représente un groupe hydroxy ou amino,

et

c) on transforme éventuellement les composés Ia ou Ib obtenus respectivement après l'étape a) ou b) en des sels des composés correspondants de formule I avec des acides ou des bases inorganiques ou organiques.

**2.** Procédé selon la revendication 1, caractérisé en ce que

$R^1$ représente un atome d'hydrogène ou un reste alkyle en $C_1$-$C_6$, cyclopentyle, cyclohexyle ou benzyle;
$R^2$ représente un atome d'hydrogène ou un reste formyle, (alkyl en $C_1$-$C_4$)carbonyle, (alcoxy en $C_1$-$C_4$)carbonyle, benzyloxycarbonyle, alkylsulfonyle en $C_1$-$C_4$, phénylsulfonyle non substitué ou substitué sur le reste phényle, et
$R^3$ représente un groupe hydroxy, amino ou alcoxy en $C_1$-$C_6$.

**3.** Procédé selon la revendication 1 ou 2, caractérisé en ce que

$R^1$ représente un atome d'hydrogène ou un reste alkyle en $C_1$-$C_4$;
$R^2$ représente un atome d'hydrogène ou un reste (alkyl en $C_1$-$C_4$)carbonyle, (alcoxy en $C_1$-$C_4$)carbonyle ou benzyloxycarbonyle et
$R^3$ représente un groupe hydroxy, amino ou alcoxy en $C_1$-$C_4$.

**4.** Procédé selon l'une des revendications 1 à 3, caractérisé en ce que, dans l'étape a) du procédé, on utilise des températures réactionnelles de 80 à 110°C.

**5.** Procédé selon l'une des revendications 1 à 4, caractérisé en ce que l'on utilise comme agents formateurs de radicaux le perbenzoate de t-butyle, le perpivalate de t-butyle, le peréthylhexanoate de t-butyle, le pernéodécanoate de t-butyle ou l'azobisisobutyronitrile, ou des mélanges de deux ou plusieurs de ces composés.

**6.** Procédé selon l'une des revendications 1 à 5, caractérisé en ce que l'on ajoute les agents formateurs de radicaux en des quantités de 0,1 à 20 % en moles par rapport au composé de formule générale II.

**7.** Procédé selon la revendication 6, caractérisé en ce que l'on ajoute les agents formateurs de radicaux en des quantités de 0,5 à 10 % en moles par rapport au composé de formule générale II.

**8.** Procédé selon l'une des revendications 1 à 7, caractérisé en ce que, dans l'étape b) du procédé, on utilise pour l'hydrolyse de l'acide chlorhydrique aqueux 3N-12N.

**9.** Procédé selon la revendication 8, caractérisé en ce que, dans l'étape b) du procédé, on utilise de l'acide chlorhydrique aqueux 5N-10N.

**10.** Procédé selon la revendication 8 ou 9, caractérisé en ce que, dans l'étape b) du procédé, on utilise une température de réaction de 90 à 130°C.